# EUROPEAN PATENT SPECIFICATION

(11) **EP 1 451 427 B1**
(45) Date of publication and mention of the grant of the patent: **20.09.2006**
(21) Application number: 02785454.6
(22) Date of filing: 03.12.2002
(51) Int. Cl.: E05D 5/02, E05D 5/12, H02B 1/38, H02B 1/44

(54) **DOOR HINGE ASSEMBLY**
TÜRSCHARNIERANORDNUNG
ENSEMBLE CHARNIERE DE PORTE

(30) Priority: 04.12.2001 FI 20012381
(43) Date of publication of application: 01.09.2004
(73) Proprietor: Suomen CNC-Metal OY, 83501 Outokumpu (FI)
(72) Inventor: JORMANAINEN, Martti, FIN-83100 Liperi (FI)
(74) Representative: Pitkänen, Hannu Alpo Antero
(86) International application number: PCT/FI2002/000969
(87) International publication number: WO 2003/060265

(56) References cited:
- EP-A1- 0 010 763
- DE-U1- 29 517 780
- DE-U1- 29 519 802
- GB-A- 2 099 910
- US-A- 2 978 736

## Description

The object of the invention is a hinge structure, in particular for fastening of a door or a corresponding of a metallic box or a housing hinge-jointed into a door opening, to which hinge structure belong at least one fixed part to be fastened on the edge of the door opening, turning parts to be fastened on the door and an interlocking organ for fastening of the fixed part and the turning parts turnable into each other, and in the door there are one or several fastening organs and in the turning parts there are one or several interlocking parts matching to the forms of the fastening organs for fastening of the turning parts on the door with a profile joint, see for example DE 295 19 802 U1.

In the presently known hinges as well the fixed as the turning part is fastened to its counter piece or in the door or on the edge of the door opening with a screw, a clinch nail, with glue, a cotter pin or some other similar fastening organ. The problem with the presently known hinges is, among others, that, that the fastening organs belonging to them remain most often visible on the outer or inner surface of the door, or they are in respect of the fastening work located in a difficult place. In addition the hitting on its place of the pivot organ between the fixed and the turning part must usually be done inside the door, where it can damage for instance the draught excluder of the door. Further the location of the hinge pivot or cotter pins belonging to the present hinges on the inner surface of the door makes the use of the door draught excluder to be glued or casted difficult. It is also known to fasten parts on the door and/or the edge of the door opening with profile joints.

The purpose with the invention is to bring forward a hinge structure, with which the above problems are removed. In particular the target with the invention is to bring forward a hinge structure, by which it is possible to fasten the hinge simply and securely on the outside of the outer surface of the door without any separate fastening organs coming between the door and the hinge and without damaging the door draught excluder, and with which hinge structure for the door the biggest possible opening angle is achieved. Additionally, the aim with the invention is to bring forward a hinge structure, which when being used makes the fastening and detaching of the door to succeed easily and quickly from the outside of the door. whereat the parts located on the outside of the door are not in a danger to get damaged when detaching the door.

The purpose with the invention is achieved with the hinge structure, which is characterized in that, what is presented in the claims.

In a hinge structure in accordance with the invention in the door one or several openings have been formed and as fastening organs function the outstanding edge parts of an opening formed in the corner of the outer surface of the door. When assembling the hinge structure the turning part is placed in the opening and transferred to the other edge in such a way, that the outstanding edge parts located on the edges of the opening go into the interlocking parts of the turning part. Following the fixed part is places on its spot and a fastening organ, such as a pin, is pressed through the holes, which are in the turning parts and the fixed part. The pin is interlocking the parts onto each other and additionally the parts on their spots. The structure is simple, reliable in function and dependable.

One of the basic ideas with the hinge jointing in accordance with the invention is, that the parts of the hinge are fastened to the door with the help of their mutual forms. In this kind of a hinge structure solution no fastening organs, such as screws, clinch nails, cotter pins or weldings on the visible or the back surface of the door, are needed. The fastening of the hinge with the help of the forms and the pivot pin is easy and quick, because it can be done outside the door. Such a location of the joint spot makes a big opening angle possible. Additionally, the hinge jointing does not constitute an obstacle for installing of draught excluders on the interior surface of the door.

A hinge structure in accordance with the invention is particularly suitable for fastening of the door of a metallic box or housing hinge-jointed into a door opening. Particularly favourable is the use of it in the door hinge jointing of the doors of electrical centres or of corresponding devices.

In an application of the invention the interlocking parts are grooves formed on the side surfaces of the turning parts of the door. In the grooves formed on the side surfaces are, when the hinge structure is installed, the edge parts of the opening on the door, which interlock the turning parts reliably on their spots. In the turning parts can in different applications be a different number of grooves. The grooves are on at least two side surfaces. In some other applications the grooves are on one end surface and in some applications on two end surfaces. When the grooves are on an end surface and in the edge part of the opening is a corresponding fillet, the turning part is got fastened on the structure also from its end. When the grooves are on the both end surfaces, the turning parts can be installed on their spots without that their position must be separately observed.

In a favourable application of the invention the grooves of the interlocking parts and the edge parts of the opening are in respect of each other in the same angle. In such a manner a structure easy to install and fixed remaining is obtained.

In the following the invention is explained more in detail by referring to the attached drawing, in which
in figure 1 a perspective picture of one door equipped with the hinge structures in accordance with the invention is presented, and
figure 2 presents a turning part of the hinge structure seen oblique from the front side and directly from the side.

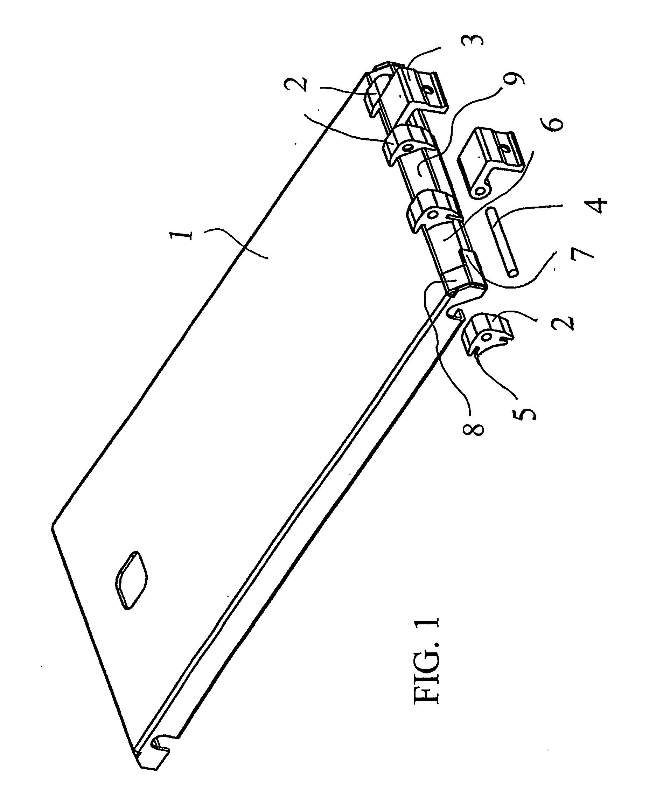

In the application presented in the figure 1 to the hinge structure belong a fixed part 3 to be fastened on the edge of the door opening, turning parts 2 to be fastened turnable on the fixed part, which are fastened on the door 1, as an interlocking organ functioning joint pin 4 for fastening of the fixed parts and the turning parts onto each other hinge-jointed as well as the openings 6 formed on the door in the corner of its outer surface. With openings are meant in this connection cutouts, recesses and corresponding, having such a deepening, that the hinge structure works.

The turning parts 2 are fastened on the door with the help of the in the door being fastening organs 7 and them corresponding interlocking parts 5 of the turning parts with a profile joint. The fixed part 3 is fastened on the edge of the door opening in a conventional manner, for instance in this case with screws.

On the corner of the outer surface of the door 1 an oblique surface has been formed, which has the outer parts 8 and the mid-part 9. Between the outer parts 8 of the oblique surface and the mid-part 9 are formed the openings 6 or the corresponding. On the edges of the openings are the edge parts 7, which in this application are extensions of the end surface and the side surface of the floor. In addition in the opening 6 on the door is an area to its width at least equal to the turning part 2 without any edge parts or at least on one side of the opening there is no edge part.

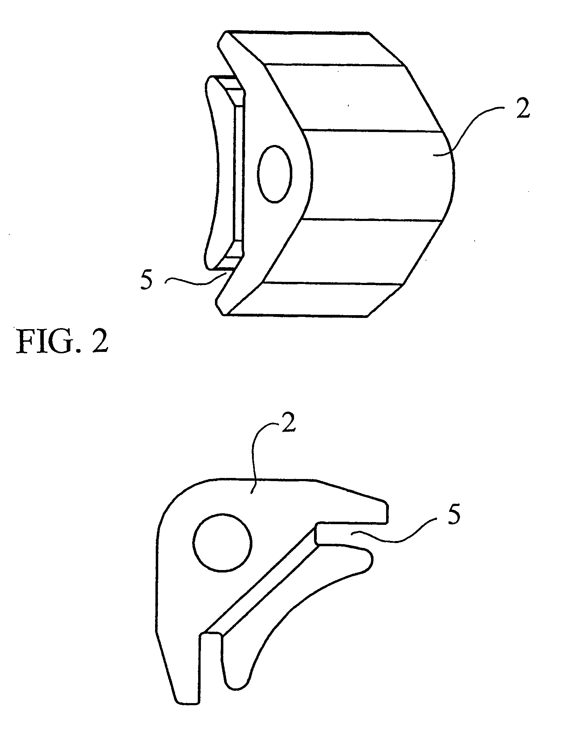

In the figure 2 the turning part 2 is presented. On the side surfaces of it are the grooves 5, which function as the interlocking parts. In addition on its end surfaces are grooves, which also function as interlocking parts. These grooves of the end surfaces have not been presented in the application in accordance with the figure 1.

The turning parts are fastened on the door in such a way, that as the fastening organs 7 on the side of the door function the outstanding edge parts of the opening 6 on the door and in the turning parts 2 as the interlocking parts 5 function the grooves formed on the side surfaces of the turning parts, the form of which match with the forms of the edge parts. These grooves 5 are in respect of each other in the same angle as the edge parts 7 in the door and mainly to their width equal to the material thickness of the door 1. Consequently the parts 2 of the hinge structure are fastened on the door 1 by means of their mutual forms. In addition the joint pin interlocks all parts on their spots and functions at the same time as the pivot pin of the hinge.

When fastening the door and the hinge structure the turning parts 2 are pushed from the middle into the hinge openings 6 in the door 1 and transferred in the direction of the edges of the opening, whereat the outstanding edge parts 7 of the opening on the door go into the interlocking grooves 5 of the part 2. The turning parts are transferred so, that they are either above the mid-part of the edge parts of the oblique surface and the groove on the end of the turning parts is pressed against on that spot from the one side to the other extending fillet (not presented on the figures). Herat the parts 2 are interlocked in two directions onto the door 1. Into the hinge opening two turning parts 2 are placed, which thus are on the edges of the opening. As the following the fixed part 3 (or the sheeting part) is installed between these two parts 2. Finally, all the parts are interlocked with each other by pushing the hinge pivot pin 4 through the holes of the parts 2 and 3. Herat the parts 2 become interlocked from a third direction, and the parts 2 cannot become loose from the door 1 anymore. On the one end of the joint pin is for the interlocking of the pin to the part 2 a protrusion or an indentation, which causes a friction interlocking in order to keep the joint pin on the spot. On the other end can be a bevelled surface in order to facilitate the placing of the pin on its spot. The turning of the hinge takes place around the turning line between the hole of part 3 and the joint pin 4.

A hinge structure in accordance with the figure 1 is fixing the parts 2 on the door 1 securely. Because the grooves 5 of the part 2 are on the two sides of the symmetry line of the part 2 symmetrically, the part 2 exists in the hinge in two pieces of the same form, no mirror image is needed. In an asymmetrical case a mirror image for the part 2 is needed.

A hinge structure in accordance with the invention can be realized also in different ways and it can be realized deviating from the application presented in the figure.

The edge parts 7 in the door can be in every usable angle whatsoever, as long as the grooves 5 in the turning part 2 are in a corresponding angle in respect of each other. As the joint pin 4 can function also a fastening organ according to a standard, such as a screw, or a tube cotter pin, as long as the free play between the part 3 and the fastening organ is the correct one. The grooves 5 of the part 2 can also be connected with each other in such a way that on the end of the part 2 is a coherent groove.

The invention is not limited to the presented favourable applications, but it can vary within the frames of the inventive idea formed by the claims.

## Claims

1. A hinge structure, in particular for the fastening of the door (1) or a corresponding of a metallic box or housing hinge jointed to a door opening, to which hinge structure belong at least one fixed part (3) to be fastened on the edge of the door opening, turning parts (2) to be fastened on the door and an interlocking organ (4) for fastening of the fixed part and the turning parts turnable onto each other, the door has one or several fastening organs (7) and in the turning parts (2) are one or several parts (6) corresponding the forms of the fastening organs for fastening of the turning parts (2) on the door with a profile joint, **characterized in, that** to the hinge structure belong one or several openings (6), which have been formed on the door, and the edge parts of the opening (6) on the door, which function as the fastening organs (7), and that in the opening (6) is an area without edge parts, which is at least equally wide with the turning part.

2. A hinge structure according to claim 1, **characterized in, that** as the interlocking parts (5) function the grooves formed on the side surfaces of the turning parts.

3. A hinge structure according to claim 2, **characterized in, that** the grooves (5) are on at least two side surfaces.

4. A hinge structure according to claim 1 or 2, **characterized in, that** the grooves (5) and the edge parts (7) of the opening mutually in the same angle in respect of each other.

5. A hinge structure according to some of the claims 1-4, **characterized in, that** as the interlocking organ is an interlocking pin (4), the one end of which is bevelled and the other end is equipped with an indentation.

6. A hinge structure according to some of the claims 1-5, **characterized in, that** on the corner of the outer surface of the door (1) an oblique surface has been formed, in which are the outer parts and the mid-part and between them openings (6) have been formed, on the edges of which are the edge parts (7).

## Patentansprüche

1. Scharnieranordnung, insbesondere für das Verschließen der Tür (1) oder eines entsprechenden Elements eines Metallkasten- oder Gehäusescharniers, das mit einer Türöffnung verbunden ist, wobei zu der Scharnieranordnung wenigstens ein fest angeordnetes Teil (3), um an der Kante der Türöffnung befestigt zu werden, Drehelemente (2), um an der Tür befestigt zu werden, und ein Verriegelungselement (4) gehören, um das fest angeordnete Teil und die Drehelemente drehbar aneinander zu befestigen, die Tür mehrere Befestigungselemente (7) aufweist und in den Drehteilen (2) ein oder mehrere Teile (6) vorgesehen sind, die den Formen der Befestigungselemente entsprechen, um die Drehelemente (2) an der Tür mit einem Profilanschlussstück zu befestigen, **dadurch gekennzeichnet, dass** zu der Scharnieranordnung eine oder mehrere Öffnungen (6), die an der Tür ausgebildet sind, und die Kantenelemente der Öffnung (6) an der Tür gehören, die als die Befestigungselemente (7) dienen, und dass in der Öffnung (6) ein Bereich ohne Kantenelemente vorgesehen ist, der wenigstens dieselbe Breite wie das Drehelement aufweist.

2. Scharnieranordnung nach Anspruch 1, **dadurch gekennzeichnet, dass** die Nuten, die an den Seitenflächen der Drehelemente ausgebildet sind, als die Verriegelungselemente (5) dienen.

3. Scharnieranordnung nach Anspruch 2, **dadurch gekennzeichnet, dass** die Nuten (5) an wenigstens zwei Seitenflächen vorgesehen sind.

4. Scharnieranordnung nach Anspruch 1 oder 2, **dadurch gekennzeichnet, dass** die Nuten (5) und die Kantenelemente (7) der Öffnung zueinander in demselben Winkel angeordnet sind.

5. Scharnieranordnung nach einigen der Ansprüche 1 bis 4, **dadurch gekennzeichnet, dass** das Verriegelungselement ein Verriegelungszapfen (4) ist, dessen eines Ende abgeschrägt ist und dessen anderes Ende mit einer Einbuchtung versehen ist.

6. Scharnieranordnung nach einigen der Ansprüche 1 bis 5, **dadurch gekennzeichnet, dass** an der Ecke der Außenfläche der Tür (1) eine geneigte Fläche ausgebildet ist, in der die äußeren Abschnitte und der mittlere Abschnitt angeordnet sind, zwischen denen Öffnungen (6) ausgebildet sind, an deren Kanten die Kantenelemente (7) vorgesehen sind.

## Revendications

1. Structure à charnières, en particulier pour la fixation de la porte (1) ou d'un élément correspondant d'une boîte métallique ou un ensemble charnière joint à une ouverture de porte, à laquelle structure à charnières appartient au moins une partie fixe (3) à fixer sur le bord de l'ouverture de porte, des parties tournantes (2) à fixer sur la porte et un organe de verrouillage (4) pour la fixation de la partie fixe et des parties tournantes pouvant tourner les unes sur les autres, la porte présente un ou plusieurs organes de fixation (7) et dans les parties tournantes (2) se trouvent une ou plusieurs parties (6) correspondant aux formes des organes de fixation pour la fixation des parties tournantes (2) sur la porte avec un joint profilé, **caractérisée en ce que** à la structure à charnières appartient une ou plusieurs ouvertures (6), qui ont été formées sur la porte, les parties de bord de l'ouverture (6) sur la porte, qui fonctionnent en tant que les organes de fixation (7), et **en ce que** dans l'ouverture (6) se trouve une zone sans parties de bord, qui est au moins de la même largeur que la partie tournante.

2. Structure à charnières selon la revendication 1, **caractérisée en ce que** les rainures formées sur les surfaces latérales des parties tournantes fonctionnent en tant que les parties de verrouillage (5).

3. Structure à charnières selon la revendication 2, **caractérisée en ce que** les rainures (5) se trouvent sur au moins deux surfaces latérales.

4. Structure à charnières selon la revendication 1 ou la revendication 2, **caractérisée en ce que** les rainures (5) et les parties de bord (7) de l'ouverture mutuellement selon le même angle les unes par rapport aux autres.

5. Structure à charnières selon certaines des revendications 1 à 4, **caractérisée en ce qu'**une broche de verrouillage (4) sert d'organe de verrouillage, l'une extrémité de laquelle est biseautée et l'autre extrémité est équipée d'une indentation.

6. Structure à charnières selon certaines des revendications 1 à 5, **caractérisée en ce que** sur le coin de la surface externe de la porte (1), une surface oblique a été formée dans laquelle se trouvent les parties externes et la partie médiane et entre elles des ouvertures (6) ont été formées, sur les bords desquelles se trouvent les parties de bord (7).
